# DEMANDE DE BREVET EUROPEEN

(11) **EP 3 564 904 A1**
(43) Date de publication de la demande: **06.11.2019**
(21) Numéro de dépôt: 19172324.6
(22) Date de dépôt: 02.05.2019
(51) Int. Cl.: G06T 7/593

(54) **PROCÉDÉ ET DISPOSITIF DE RECONNAISSANCE DE DISTANCE EN TEMPS RÉEL**

(30) Priorité: 03.05.2018 FR 1853813
(71) Demandeur: COMMISSARIAT À L'ÉNERGIE ATOMIQUE ET AUX ÉNERGIES ALTERNATIVES, 75015 Paris (FR)
(72) Inventeur: PELISSON, Roland, 38054 GRENOBLE CEDEX 9 (FR)
(74) Mandataire: Brevalex

(57) **Abrégé**

L'invention concerne un dispositif de reconnaissance de distance en temps réel comprenant des première et deuxième caméras (C1, C2), comportant :
- une troisième caméra (C3) disposée plus près de la première caméra (C1) que de la deuxième caméra (C2), lesdites première, deuxième et troisième caméras étant configurées pour acquérir simultanément des première, deuxième et troisième images (I1, I2, I3) respectivement, et
- un circuit électronique (3) configuré pour estimer la distance d'un objet en fonction d'une correspondance stéréoscopique établie entre des premiers et deuxièmes éléments (E1, E2) représentatifs dudit objet et appartenant aux première et deuxième images (I1, I2) respectivement, ladite correspondance stéréoscopique étant établie en tenant compte d'une relation entre lesdits premiers éléments (E1) et des troisièmes éléments (E3) correspondants appartenant à la troisième image.

## Description

### DOMAINE TECHNIQUE

La présente invention concerne le domaine de reconnaissance de distance et plus particulièrement, selon la technique de mesure stéréoscopique à base de deux caméras intercalées par une troisième caméra de guidage.

### ÉTAT DE LA TECHNIQUE ANTÉRIEURE

De manière générale, la technique de mesure stéréoscopique consiste à utiliser deux images prises par deux caméras espacées, pour déterminer les distances des objets pris en image. Les distances sont calculées en mettant en correspondance les contenus des deux images.

Toutefois, un système stéréoscopique à deux caméras est facilement mis en défaut par des objets masqués ou des structures répétitives comme par exemple une grille verticale. En effet, les deux caméras peuvent amener à une confusion entre par exemple deux barreaux verticaux de la grille.

Afin de résoudre en partie ce genre de problèmes, il est connu d'autres techniques de mesure stéréoscopique utilisant plus de deux caméras pour dupliquer les points de vue et les mises en correspondances potentielles. Un tel exemple est décrit dans le document CA2245044 qui concerne des calculs de stéréovision effectués sur différents couples de caméras. Les différents calculs sont comparés afin de rejeter les mauvaises mises en correspondances. Un autre exemple est décrit dans le document JP561240376 qui utilise trois systèmes de focalisation pour éviter les erreurs de stéréovision quand par exemple un objet fin est situé derrière un autre et apparait alors inversé entre les deux images.

Toutes ces techniques alourdissent la résolution de base avec un gain assez faible et nécessitent des algorithmes complexes requérant une grande puissance de calcul.

L'objet de la présente invention est de proposer un procédé et un dispositif de reconnaissance de distance en temps réel, remédiant aux inconvénients précités, en particulier en résolvant les problèmes dus à des structures répétitives ou à des objets masqués tout en n'ayant pas recours à des algorithmes de calculs complexes.

### EXPOSÉ DE L'INVENTION

La présente invention est définie par un dispositif de reconnaissance de distance en temps réel comprenant des première et deuxième caméras, comportant :
- une troisième caméra disposée plus près de la première caméra que de la deuxième caméra, lesdites première, deuxième et troisième caméras étant configurées pour acquérir simultanément des première, deuxième et troisième images respectivement, et
- un circuit électronique configuré pour estimer la distance d'un objet en fonction d'une correspondance stéréoscopique établie entre des premiers et deuxièmes éléments représentatifs dudit objet et appartenant aux première et deuxième images respectivement, ladite correspondance stéréoscopique étant établie en tenant compte d'une relation entre lesdits premiers éléments et des troisièmes éléments correspondants appartenant à la troisième image.

Ce dispositif permet de faciliter la détermination des relations entre les contenus des images tout en ayant une bonne résolution pour la reconnaissance des distances, ceci tout en étant capable de ne pas se laisser piéger par des structures répétitives ou des objets masqués. En effet, le fait que la troisième caméra est très proche de la première caméra fait que le décalage entre les contenus des troisième et première images est très faible permettant de réduire la zone de recherche de correspondance et par conséquent de déterminer une application très précise entre les contenus des première et troisième images. En outre, les caméras éloignées permettent d'augmenter la résolution de l'estimation de distances des différents objets. Ainsi, une distance en stéréovision en temps réel est réalisée sans avoir recours à des algorithmes de calculs complexes.

Avantageusement, le circuit électronique est configuré pour extraire depuis les première, deuxième et troisième images des premiers, deuxièmes et troisièmes éléments sélectionnés parmi les éléments suivants : contours, segments d'images, et sous-zones d'images rectangulaires.

Ceci permet de minimiser la quantité d'information sur les images facilitant ainsi la configuration du circuit électronique tout en maintenant la précision de reconnaissance de distances. On notera qu'un contour correspond à un pixel d'une ligne d'image où le changement d'intensité lumineuse est maximum comparativement à ses pixels voisins situés sur la même ligne (comme par exemple le bord d'une bande blanche d'un passage piéton). Les sous-zones d'images sont des zones bidimensionnelles (par exemple des carrés 5x5 pixels d'une même ligne).

Avantageusement, la troisième caméra est disposée à une distance prédéterminée de la première caméra, ladite distance prédéterminée étant configurée pour que chaque premier élément dans la première image soit associé à un seul troisième élément dans la troisième image. Par exemple, il est avantageux que la troisième caméra soit située à 1cm, voire moins, de la première caméra.

Ceci facilite l'établissement de correspondances entre les contours des images captées par les caméras proches.

On notera que le quotient de la distance entre les première et troisième caméras sur la distance entre les première et deuxième caméras peut être plus petit ou égal à environ un cinquième. Ceci optimise le rapport entre la simplicité et la précision du dispositif.

Avantageusement, les première, deuxième et troisième caméras sont disposées de manière colinéaire et le circuit électronique est configuré pour comparer les premiers, deuxièmes et troisièmes contours appartenant respectivement aux première, deuxième et troisième images de manière indépendante et ligne par ligne.

En variante, les première, deuxième et troisième caméras sont alignées et sont configurées pour capter les première, deuxième et troisième images de manière unidimensionnelle. Ainsi, il suffit d'avoir une simple barrette image 1D (i.e. une ligne de pixels).

Avantageusement, le circuit électronique est configuré pour :
- extraire les premiers, deuxièmes et troisièmes éléments appartenant à une même ligne horizontale sur les première, deuxième et troisième images,
- établir une application entre les premiers éléments et les troisièmes éléments en associant pour chaque premier élément un unique troisième élément correspondant compris dans une zone de recherche intermédiaire réduite appartenant à la troisième image, et
- établir ladite correspondance stéréoscopique entre les premiers éléments et les deuxièmes éléments en associant pour l'unique troisième élément compris dans la zone de recherche intermédiaire réduite correspondante un seul deuxième élément correspondant compris dans une deuxième zone de recherche appartenant à la deuxième image, ladite deuxième zone de recherche pouvant contenir plusieurs contours.

Ceci permet d'éliminer les incertitudes de relations entre les contenus des première et deuxième images.

Selon un mode de réalisation préféré de la présente invention, lesdits premiers, deuxièmes et troisièmes éléments sont des premiers, deuxièmes et troisièmes contours respectivement.

Selon ce mode de réalisation, le circuit électronique comporte :
- des filtres d'extraction de contraste configurés pour réaliser une convolution sur une même ligne de chacune des première, deuxième et troisième images formant ainsi des premières, deuxièmes et troisièmes courbes de contraste sur ladite même ligne des première, deuxième et troisième images,
- des filtres de seuillage configurés pour réaliser des seuillages sur lesdites premières, deuxièmes et troisièmes courbes de contraste formant ainsi des premiers, deuxièmes et troisièmes contours respectivement,
- des codeurs configurés pour réaliser un codage sur lesdits premiers, deuxièmes et troisièmes contours formant ainsi des premiers, deuxièmes et troisièmes niveaux discrets respectivement, et
- un circuit de composants électroniques (basiques) configuré pour :
   - déterminer un premier décalage en pixels entre la position de chaque premier contour et celle du troisième contour correspondant définissant ainsi ladite application entre les premiers contours et les troisièmes contours,
   - déterminer un deuxième décalage en pixels entre la position de chaque premier contour et celle du deuxième contour correspondant définissant ainsi ladite correspondance stéréoscopique entre les premiers contours et les deuxièmes contours, et
   - estimer la distance d'un objet en fonction des deuxièmes décalages en pixels entre les positions des premiers contours et celles des deuxièmes contours représentant ledit objet.

Ainsi, le dispositif comporte des opérations électroniques très simples qui se résument à des opérations basiques sur les pixels individuels d'une ligne de l'image sans même rechercher des formes dans l'ensemble des pixels de l'image complète en 2D.

Avantageusement, le circuit électronique comporte un mécanisme d'alerte configuré pour signaler tout objet dès que sa distance par rapport aux caméras commence à atteindre une limite inférieure prédéterminée.

Avantageusement, les première, deuxième et troisième caméras sont des caméras en lumière visible ou des caméras infrarouges. Ceci permet au dispositif de fonctionner dans un environnement lumineux ou sombre.

Avantageusement, le dispositif comporte un projecteur de motifs configuré pour projeter des motifs répétitifs en face des première, deuxième et troisième caméras, lesdits motifs répétitifs présentant un espacement supérieur à celui entre les première et troisième caméras.

Avantageusement, le circuit électronique comporte en outre un processeur configuré pour réaliser un redressement des images avant de réaliser la reconnaissance de distance.

Ceci permet de corriger d'éventuels problèmes d'alignement entre les différentes images.

Avantageusement, le processeur est en outre configuré pour réaliser une reconnaissance de forme sur des zones d'images identifiées selon une distance unique.

Avantageusement, le processeur peut aussi être configuré pour traiter les éléments correspondant à des segments d'images ou des sous-zones d'images rectangulaires en les rendant plus discernables ou plus pertinents.

Avantageusement, le processeur est configuré pour estimer une distance approximative sur une image sans contours en mettant en relation des pixels présentant une intensité lumineuse identique.

Selon un autre mode de réalisation de l'invention, le dispositif comporte en outre une suite de caméras de guidage supplémentaires disposées selon des écarts croissants en partant de la première caméra vers la troisième caméra de guidage.

Ceci permet d'utiliser des caméras à très fort nombre de pixels et de travailler dans des zones aux contours très proches.

Selon un mode de réalisation particulier, le dispositif comporte une caméra de guidage supplémentaire, l'écart entre la première caméra et la troisième caméra étant d'environ un-cinquième de celui entre la première caméra et la deuxième caméra, et l'écart entre la première caméra et la caméra de guidage supplémentaire étant d'environ un-vingt-cinquième de celui entre la première caméra et la deuxième caméra.

Selon encore un autre mode de réalisation de l'invention, le dispositif comporte une pluralité d'autres caméras disposées selon des directions différentes par rapport à la disposition colinéaire des première, deuxième et troisième caméras.

Avantageusement, le dispositif comporte des quatrième et cinquième caméras espacées d'une distance prédéterminée et montées perpendiculairement par rapport à la disposition colinéaire des première, deuxième et troisième caméras, la quatrième caméra étant disposée à proximité de la première caméra, lesdites première, deuxième, troisième, quatrième et cinquième caméras étant configurées pour acquérir des images simultanément.

L'invention vise également un système mobile comportant le dispositif selon l'une quelconque des revendications précédentes.

Ainsi, le système mobile (exemple véhicule, objet volant, drone) équipé de ce dispositif est capable de reconnaitre en temps réel des obstacles et d'avoir un aperçu de l'environnement sans utiliser des calculs très lourds.

L'invention concerne également un procédé de reconnaissance de distance en temps réel en utilisant des première et deuxième caméras, et comportant les étapes suivantes :
- disposer une troisième caméra à proximité de la première caméra, lesdites première, deuxième et troisième caméras étant configurées pour acquérir simultanément des première, deuxième et troisième images respectivement, et
- estimer la distance d'un objet en fonction d'une correspondance stéréoscopique établie entre des premiers et deuxièmes éléments représentatifs dudit objet et appartenant aux première et deuxième images respectivement, ladite correspondance stéréoscopique étant établie en tenant compte d'une relation entre lesdits premiers éléments et des troisièmes éléments correspondants appartenant à la troisième image.

### BRÈVE DESCRIPTION DES DESSINS

La Fig. 1 illustre de manière schématique un dispositif de reconnaissance de distance en temps réel, selon un mode de réalisation de l'invention ;
Les Figs. 2A et 2B illustrent des images prises par le dispositif de reconnaissance et leur représentation, selon l'invention ;
La Fig. 3 illustre de manière schématique un dispositif de reconnaissance de distance en temps réel, selon un mode de réalisation préféré de l'invention ;
Les Figs. 4A-4F illustrent de manière schématique un procédé de reconnaissance de distance en temps réel, selon un mode de réalisation de l'invention ;
La Fig. 5 illustre de manière schématique des premiers, deuxièmes et troisièmes contours codés décalés entre eux et issus des première, deuxième et troisième images prises simultanément par les trois caméras, selon un mode de réalisation de l'invention ;
La Fig. 6 illustre de manière schématique un circuit électronique selon un mode de réalisation préféré de l'invention ;
Les Figs. 7 et 8 illustrent de manière schématique des dispositifs de reconnaissance de distance en temps réel, selon d'autres modes de réalisation préféré de l'invention ; et
La Fig. 9 illustre de manière schématique un système mobile comportant un dispositif de reconnaissance de distance, selon un mode de réalisation préféré de l'invention.

### EXPOSÉ DÉTAILLÉ DE MODES DE RÉALISATION PARTICULIERS

Le concept à la base de l'invention consiste à rajouter une caméra supplémentaire très proche de l'une des deux caméras d'un système de stéréovision classique tout en utilisant un circuit électronique basique de faible consommation électrique pour déterminer la distance d'un objet. Le circuit électronique est un circuit matériel de portes logiques qui permet de réduire la consommation électrique de 10 à 100 fois par rapport à celle d'un dispositif de l'art antérieur qui utilise des algorithmes complexes à grand renfort pour éviter les fausses correspondances.

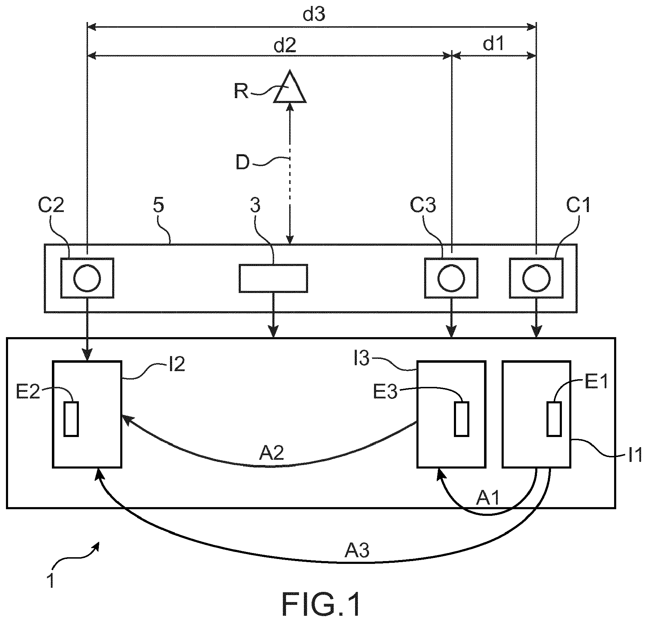

La Fig. 1 illustre de manière schématique un dispositif de reconnaissance de distance en temps réel, selon un mode de réalisation de l'invention. La Fig. 1 illustre également un procédé de reconnaissance de distance en temps réel, selon un mode de réalisation de l'invention.

Le dispositif de reconnaissance 1 de distance comporte des première C1, deuxième C2 et troisième C3 caméras ainsi qu'un circuit électronique 3.

Les première C1, deuxième C2 et troisième C3 caméras sont montées sur un support 5 et sont agencées pour acquérir simultanément des première I1, deuxième I2 et troisième I3 images respectivement. Avantageusement, les caméras C1, C2, C3 fournissent des images I1, I2, I3 numériques composées d'un nombre déterminé de pixels définissant la résolution des images.

La troisième caméra C3 est une caméra de guidage située entre les deux caméras C1 et C2 et plus particulièrement, disposée de manière très proche de l'une d'entre elles. Selon cet exemple, la troisième caméra C3 est disposée à proximité de la première caméra C1. Ainsi, la distance d1 séparant la première caméra C1 de la troisième caméra C3 est inférieure à la distance d2 séparant la deuxième caméra C2 de la troisième caméra C3. Par exemple, la distance d1 est cinq à dix fois plus petite que la distance d2.

Le fait que les première C1 et troisième C3 caméras soient très proches fait que les images I1 et I3 qu'elles captent sont très similaires à un léger décalage de pixels près, **le** décalage étant lié à la distance de l'objet observé. Ce décalage est de zéro pixel si l'objet est à l'infini et de l'ordre de quelques unités de pixels à quelques dizaines de pixels (selon la résolution de l'image) s'il est très près des caméras C1, C2, C3. Ce faible décalage délimite la recherche de correspondance entre des formes contenues dans les deux images I1 et I3 à une petite zone de recherche. Ceci permet très aisément de mettre en relation les formes correspondantes de ces deux images I1 et I3.

On notera que le décalage en pixels entre les images I1 et I2 captées par les caméras extrêmes (i.e. première C1 et deuxième C2 caméras) est supérieur à celui entre les images I1 et I3 captées par les caméras proches (i.e. première C1 et troisième C3 caméras) d'un facteur qui dépend du quotient entre la distance d3 des caméras extrêmes C1, C2 et la distance d1 entre les caméras proches C1, C3.

Avantageusement, le quotient entre la distance d1 séparant les première C1 et troisième C3 caméras sur la distance d3 séparant les première C1 et deuxième C2 caméras est inférieur ou égal à environ un cinquième. Par exemple, dans le cas où ce quotient est égal à un sixième (i.e. la distance entre C1 et C2 est six fois plus grande que celle entre C1 et C3), alors un décalage de « 120 » pixels entre des formes contenues dans les première I1 et deuxième I2 images (ayant une résolution de quelques centaines de pixels) se traduit par un décalage de seulement « 20 » pixels entre des formes correspondantes contenues dans les première I1 et troisième I3 images. On notera qu'un grand décalage (« 120 » pixels sur une résolution de seulement quelques centaines de pixels) peut créer une incertitude sur la mise en relation des formes contenues dans les première I1 et deuxième I2 images et notamment pour des formes répétitives comme une grille ou un feuillage. Toutefois, un décalage de seulement « 20 » pixels permet d'élaborer une correspondance précise entre les formes contenues dans les première I1 et troisième I3 images. Ainsi, la troisième caméra C3 joue un rôle de guidage qui facilite la détermination d'une relation de correspondance entre les formes contenues dans les images I1 et I2 des caméras extrêmes C1 et C2.

En outre, le circuit électronique 3 est configuré pour établir une correspondance stéréoscopique entre des premiers E1 et deuxièmes E2 éléments appartenant aux première I1 et deuxième I2 images respectivement en tenant compte d'une relation de correspondance entre les premiers éléments E1 et des troisièmes éléments E3 équivalents appartenant à la troisième image I3.

Avantageusement, la troisième caméra C3 est située à une distance d1 prédéterminée (par exemple, 1 cm) de la première caméra C1 de sorte qu'un premier élément E1 dans la première image soit associé à un seul troisième élément E3 dans la troisième image.

On notera que les éléments E1, E2 et E3 peuvent être des contours, des segments d'images ou des sous-zones d'image, par exemple les sous-zones d'image présentant chacune une forme rectangulaire. Les contours correspondent à des bords des objets représentés dans les images tandis que les segments ou sous-zones d'images correspondent à des formes géométriques de type rectangle, carré ou autres formes, comportant un nombre déterminé de pixels (par exemple, des carrés de 5x5 pixels).

Pour construire la correspondance stéréoscopique A3 entre les premiers E1 et deuxièmes E2 éléments appartenant aux première I1 et deuxième I2 images, le circuit électronique 3 est configuré pour composer deux applications. Une première application A1 est établie entre les premiers éléments E1 appartenant à la première image I1 et les troisièmes éléments E3 correspondants appartenant à la troisième image I3. Une deuxième application A2 est établie entre les troisièmes éléments E3 appartenant à la troisième image I3 et les deuxièmes éléments E2 correspondant appartenant à la deuxième image I2. Les images (au sens mathématique du terme, c'est-à-dire, les résultats) de la première application A1 sont utilisées comme arguments pour la seconde application A2.

Ainsi, la justesse de la relation de correspondance entre les première I1 et troisième I3 images établie par l'application A1 permet au circuit électronique 3 d'estimer avec précision la distance D d'un objet R par rapport au dispositif 1 en fonction de la correspondance stéréoscopique A3 entre des premiers E1 et deuxièmes E2 éléments représentatifs de l'objet et appartenant respectivement aux première I1 et deuxième I2 images.

On notera qu'une technique classique de mesure stéréoscopique peut être utilisée par le circuit électronique 3 pour estimer la distance d'un objet en fonction de l'écart en pixels entre les premiers E1 et deuxièmes E2 éléments représentatifs de l'objet. Un algorithme classique de mesure stéréoscopique est par exemple la méthode de fenêtre fixe FW (Fixed Window) selon une stratégie de coût d'agrégation. Une telle méthode est décrite dans le document de Stephano Mattocia intitulé « Stero Vision : Algorithms and Applications », (www.vision.deis.unib.it/smatt). Les défauts de fonctionnement de cette méthode classique sont résolus par une zone de recherche réduite grâce à la troisième caméra selon la présente invention.

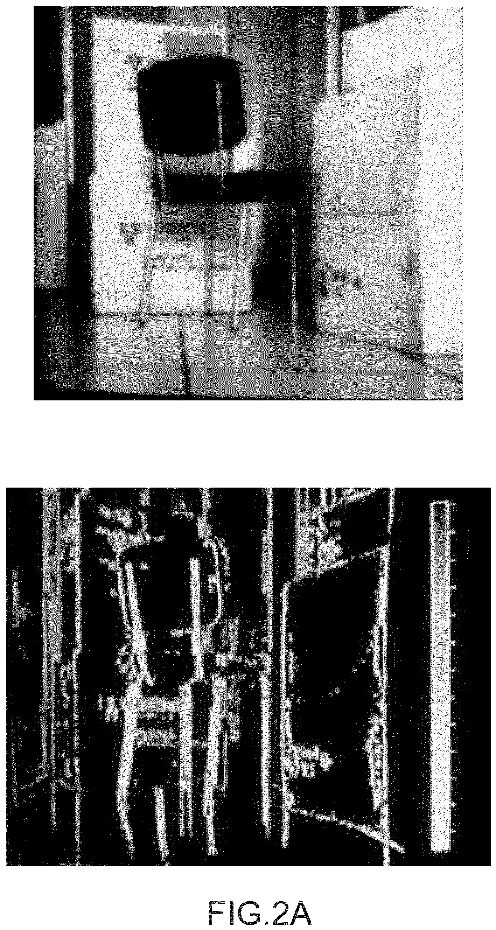

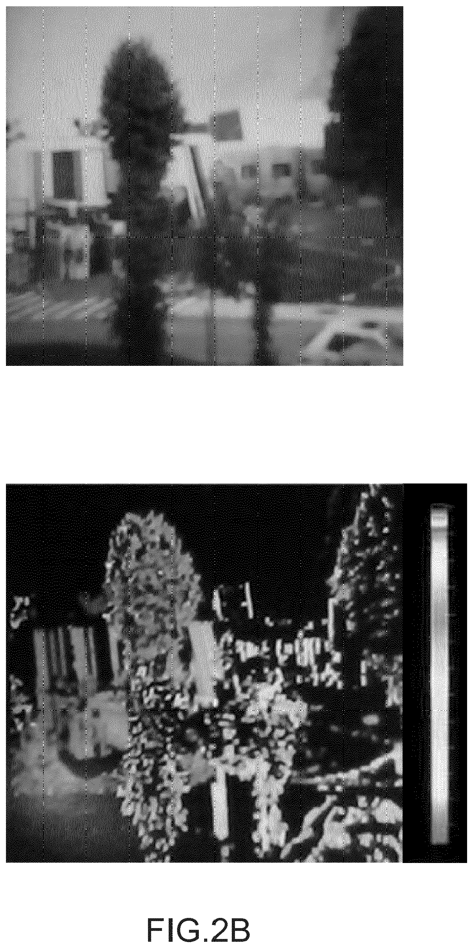

Avantageusement, l'image résultante est affichée sur une interface et les différentes distances D des différents objets par rapport au dispositif 1, peuvent être représentées sur l'image résultante selon une échelle de différentes couleurs comme représenté sur la Fig. 2.

En effet, les Figs. 2A et 2B illustrent des images I11, I12 prises par le dispositif de reconnaissance 1 et leurs représentations I13, I14 respectivement. Les représentations I13 et I14 modélisent les distances des différents éléments déterminées par le circuit électronique 3 selon une échelle de couleurs. L'échelle à droite indique la correspondance entre la luminosité du contour et sa distance, la couleur la plus claire/lumineuse étant représentative d'un contour de l'objet situé à une distance la plus faible du dispositif 1.

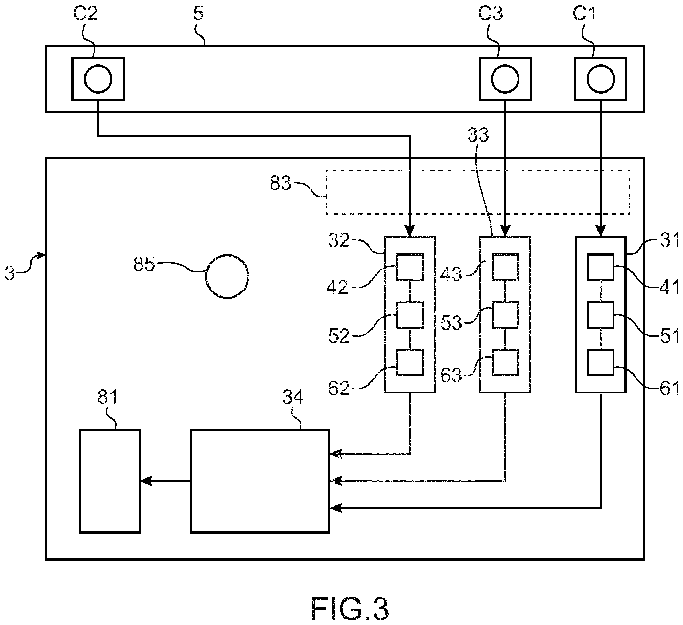

La Fig. 3 illustre de manière schématique un exemple d'un dispositif de reconnaissance de distance en temps réel, selon un mode de réalisation préféré de l'invention.

Le dispositif de reconnaissance 1 de distance comporte des première C1, deuxième C2 et troisième C3 caméras montées sur un support 5, prenant par exemple la forme d'une réglette. Les première C1 et deuxième C2 caméras sont montées sur les extrémités de la réglette 5 tandis que la troisième caméra C3 est montée plus près de la première caméra C1 que de la deuxième caméra C2. Avantageusement, les première C1, deuxième C2 et troisième C3 caméras peuvent être des caméras numériques en lumière visible ou en infrarouge. On notera par ailleurs que ces caméras peuvent tout simplement être des capteurs alignés et configurés pour capter des première, deuxième et troisième images unidimensionnelles.

Le dispositif de reconnaissance 1 comporte également un circuit électronique 3 comprenant des premier 31, deuxième 32 et troisième 33 dispositifs de codage reliés aux première C1, deuxième C2 et troisième C3 caméras respectivement ainsi qu'un circuit de câblage 34 comprenant des composants électroniques basiques. Les dispositifs de codage 31, 32, 33 sont adaptés pour réduire le bruit électronique, rechercher des contours et éliminer des contours très peu marqués. Chacun des dispositifs de codage 31, 32, 33 comporte un filtre d'extraction de contraste 41, 42, 43, un filtre de seuillage 51, 52, 53 et un codeur 61, 62, 63.

Selon cet exemple, la distance d3 entre les première C1 et deuxième C2 caméras est choisie pour être environ six fois plus grande que la distance d1 entre les première C1 et troisième C3 caméras. Cette dernière distance d1 peut être de l'ordre de quelques centimètres, par exemple de l'ordre de un à cinq centimètres. La résolution numérique des caméras peut être de l'ordre de quelques centaines à quelques dizaines de milliers de pixels. Les objectifs des trois caméras C1, C2 et C3 sont colinéaires et par conséquent, un élément représentant un objet à l'infini porte le même numéro de pixel sur les trois images. Toutefois, le décalage par rapport à la première image d'un élément, prise par la première caméra C1, représentant un objet proche sera environ six fois plus grand sur la deuxième image que sur la troisième image.

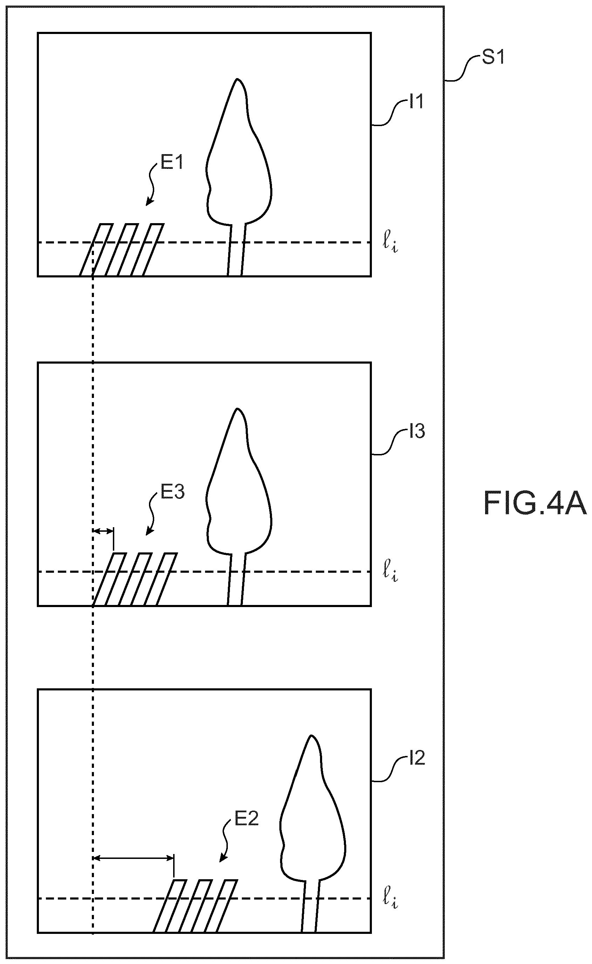

Les Figs. 4A-4F illustrent de manière schématique un mode de réalisation préféré d'un procédé de reconnaissance de distance en temps réel, selon le dispositif de la Fig. 3.

L'étape S1 concerne la prise des première, deuxième et troisième images par les première C1, deuxième C2 et troisième C3 caméras respectivement à un même instant. En effet, la Fig. 4A illustre à titre d'exemple et de manière schématique des première I1, deuxième I2 et troisième I3 images prises simultanément par les trois caméras C1, C2, C3 sur lesquelles sont représentés des premiers E1, deuxièmes E2 et troisièmes E3 éléments décalés entre eux. Selon cet exemple, les éléments correspondent à des images d'objets tels qu'un passage piéton et un arbre (voire également Fig. 2B).

Aux étapes S2-S5, le circuit électronique 3 est configuré pour extraire depuis les première I1, deuxième I2 et troisième I3 images des premiers, deuxièmes et troisièmes contours respectivement. Ainsi, selon ce mode de réalisation, les éléments sont des contours qui représentent les bords des objets.

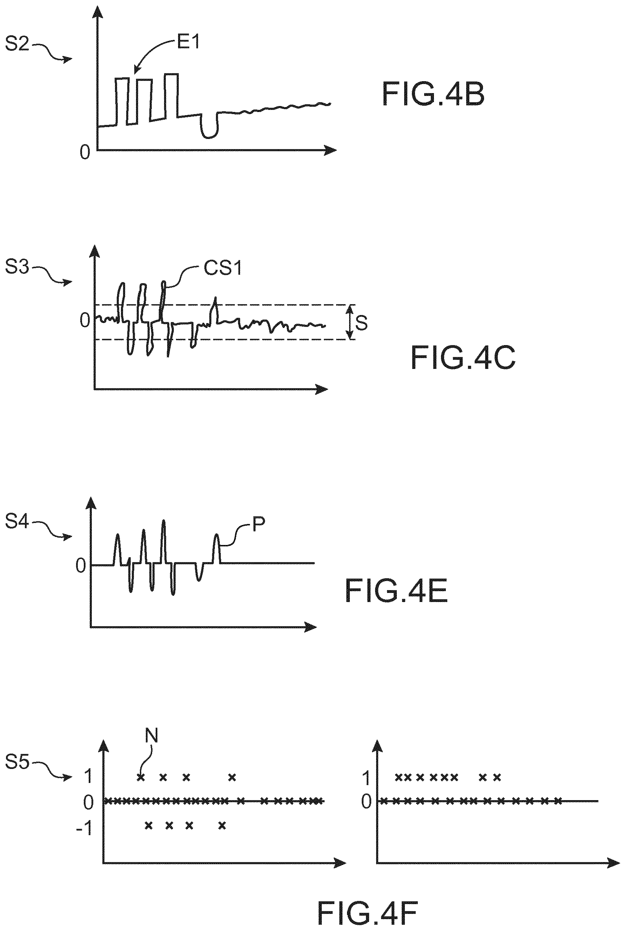

Avantageusement, le circuit électronique 3 est configuré pour analyser les première I1, deuxième I2 et troisième I3 images ligne par ligne. Ainsi, à l'étape S2 un même numéro de ligne horizontale lᵢ est sélectionné sur les trois images I1, I2, I3 (voir Fig. 4A). Par exemple, dans un premier temps, c'est la première ligne de pixels située le plus bas des images qui est sélectionnée. L'étape S2 est représentée sur la Fig. 4B qui illustre une courbe de l'intensité lumineuse en fonction du numéro de pixel sur la ligne horizontale sélectionnée lᵢ. Par exemple, le premier pixel est celui situé le plus à gauche de la ligne de pixels. Pour des raisons de simplification, seule la courbe relative à la première image est illustrée sur la Fig. 4B.

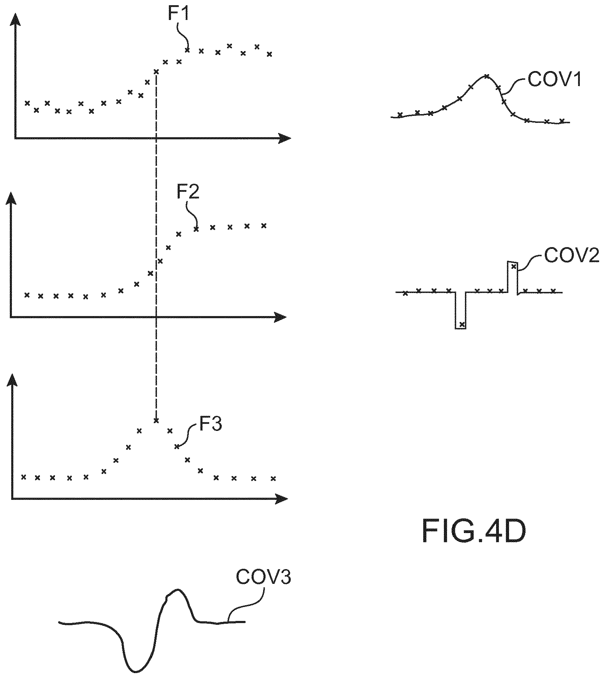

A l'étape S3, les filtres d'extraction de contraste 41, 42, 43 sont configurés pour réaliser une convolution sur la même ligne lᵢ de chacune des première I1, deuxième I2 et troisième I3 images formant ainsi des premières, deuxièmes et troisièmes courbes de contraste CS1 correspondantes. La Fig. 4C illustre à titre d'exemple les premières courbes de contraste CS1 appartenant à la première image I1. En outre, la technique d'extraction de courbes de contraste est illustrée avec plus de détail sur la Fig. 4D. Le premier graphique de la Fig. 4D illustre une courbe initiale F1 représentant l'intensité lumineuse d'une partie d'une ligne en fonction du numéro de pixel. Ceci correspond par exemple à une zone du graphique illustré sur la Fig. 4B de l'étape S2. Afin de lisser la courbe initiale, une première convolution COV1 est appliquée sur cette courbe initiale F1 en utilisant un filtre passe bas de type gaussien formant ainsi une courbe lissée F2 illustrée sur le deuxième graphique.

Ensuite, la position d'un changement de contraste (i.e. position de contour) est déterminée en calculant la pente entre deux points suffisamment espacés. Ceci peut être réalisé en appliquant une deuxième convolution COV2 sur la courbe lissée F2 formant une courbe de contraste F3. A titre d'exemple, on utilise des fonctions de Dirac pour estimer la position de chaque contour.

En variante, les première et deuxième convolutions peuvent être regroupées en une seule convolution COV3 en utilisant par exemple une ondelette de forme sinusoïdale. On notera que la convolution consiste à appliquer de manière connue une matrice de coefficients sur une fenêtre comportant un pixel donné et ses voisins puis à faire glisser cette fenêtre sur toute l'image.

A l'étape S4, les filtres de seuillage 51, 52, 53 sont configurés pour réaliser des seuillages sur les premières, deuxièmes et troisièmes courbes de contraste CS1 selon un seuil de rejet S prédéterminé (voir Fig. 4C). Ce seuil de rejet S permet d'éliminer les bruits et les petites variations. Les premières, deuxièmes et troisièmes courbes de contraste résultantes (appelées dans la suite premiers, deuxièmes et troisièmes contours ou pics P) présentent une bonne définition de contraste. Le résultat de l'étape S4 est illustré à titre d'exemple sur la Fig. 4E qui montre les premiers contours résultants (ou pics) P de la première image I1.

A l'étape S5, les codeurs 61, 62, 63 sont configurés pour réaliser un codage discret selon trois niveaux de sortie « -1 », « 0 » ou « 1 » sur les premiers, deuxièmes et troisièmes contours formant respectivement des premiers, deuxièmes et troisièmes niveaux discrets N (voir Fig. 4F). Plus particulièrement, le niveau « -1 » est attribué aux pics négatifs, le niveau « 1 » est attribué aux pics positifs et finalement, le niveau « 0 » est attribué aux intervalles entre les pics.

En variante, les premiers, deuxièmes et troisièmes contours sont codés de manière binaire selon deux valeurs « 0 » ou « 1 » en prenant tout simplement la valeur absolue des trois niveaux précédents. Ainsi, la valeur « 1 » est attribuée à la fois aux pics positifs et aux pics négatifs tandis que la valeur « 0 » est comme précédemment attribuée aux intervalles entre les pics. Les deux variantes de l'étape S5 sont illustrées sur la Fig. 4F. Les valeurs discrètes (-1, 0, 1) ou binaires (0, 1) désignent des contours ou pics et par conséquent, les termes « valeur discrète » et « contour » sont tout simplement confondus dans la suite.

Aux étapes S6-S8, le circuit de câblage 34 est configuré pour comparer les positions des différents contours P sur les trois images afin de déterminer une correspondance entre les contours P sur les première I1 et deuxième I2 images à l'aide de la troisième image I3. Cette correspondance est réalisée à partir des niveaux discrets reçus ligne par ligne et pixel par pixel depuis les premier 31, deuxième 32 et troisième 33 dispositifs de codage reliés aux première C1, deuxième C2 et troisième C3 caméras respectivement. Cette correspondance permet ensuite d'estimer la distance de l'objet.

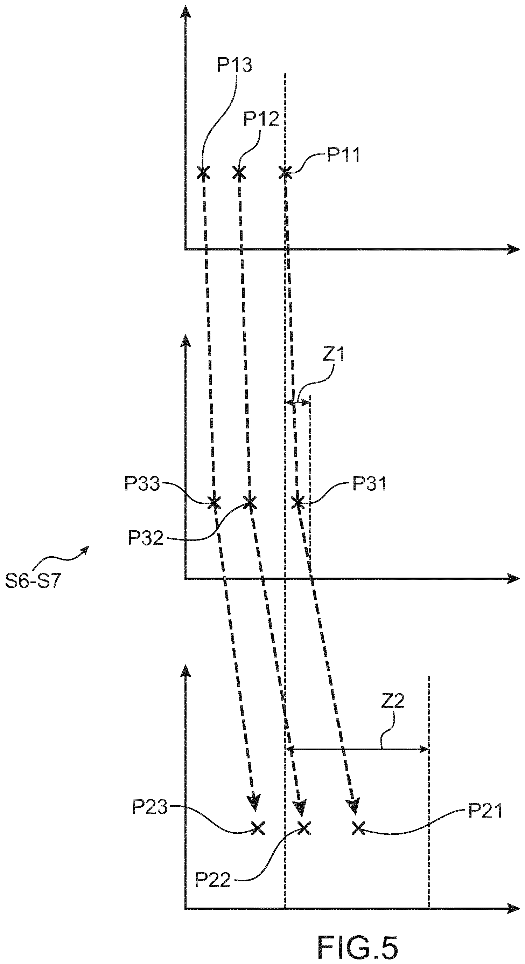

Afin d'expliciter les étapes S6-S8, on illustre sur la Fig. 5 de manière schématique des premiers, deuxièmes et troisièmes contours codés décalés entre eux et issus des première, deuxième et troisième images prises simultanément par les trois caméras, selon un mode de réalisation de l'invention. On rappelle qu'un contour codé représente la plus forte pente de changement d'intensité entre par exemple le gris du goudron et le blanc du passage clouté. On notera par ailleurs que les contours sur la Fig. 5 peuvent représenter des éléments selon la présente invention (i.e. contours, segments ou sous-zones d'images).

Les premiers contours P11-P13 issus de la première image I1, les deuxièmes contours P21-P23 issus de la deuxième image I2, et les troisièmes contours P31-P33 issus de la troisième image I3 sont décalés entre eux mais représentent un même élément E1, E2, E3 image du même objet proche pris selon différents points de vue à un même instant. Un premier contour P11 sur la première image I1 est associé à un troisième contour correspondant P31 qui peut se trouver dans une zone de recherche intermédiaire (dite zone de guidage) Z1 de la troisième image I3. Le deuxième contour P21 sur la deuxième image I2 correspondant à ce premier contour P11 est à rechercher dans une grande zone de recherche de correspondance Z2. La description relative aux zones de recherche Z1, Z2 sera détaillée plus loin dans la description.

Selon cet exemple, la grande zone de recherche de correspondance Z2 dans la deuxième image I2 comporte deux deuxièmes contours P21 et P22 distincts pouvant par conséquent, induire une incertitude sur le choix du deuxième contour. Toutefois, la zone de guidage Z1 de la troisième image I3 ne comporte qu'un seul troisième contour P31 ce qui permet d'établir une correspondance précise avec le premier contour P11 associé à la première image I1 et par composition de correspondances à bien déterminer le deuxième contour P21 correspondant. Ainsi, grâce à une étendue réduite de la zone de guidage Z1, le circuit électronique 3 peut établir une correspondance stéréoscopique précise entre les première I1 et deuxième I2 images.

En effet, à l'étape S6, le circuit de câblage 34 est configuré pour établir une application entre les premiers contours P11-P13 et les troisièmes contours P31-P33 en associant pour chaque premier contour un unique troisième contour correspondant compris dans une zone de recherche intermédiaire Z1 appartenant à la troisième image I3. Plus particulièrement, le circuit de câblage 34 établit cette application en déterminant un premier décalage en pixels entre la position de chaque premier contour P11-P13 et celle du troisième contour P31-P33 correspondant.

A l'étape S7, le circuit de câblage 34 est configuré pour établir la correspondance stéréoscopique entre les premiers contours P11-P13 et les deuxièmes contours P21-P23. L'unique troisième contour P31 compris dans la zone de recherche intermédiaire Z1 correspondante est associé à un seul deuxième contour correspondant P21 compris dans une deuxième zone de recherche Z2 appartenant à la deuxième image I2.

Plus particulièrement, le circuit de câblage 34 établit la correspondance stéréoscopique en déterminant un deuxième décalage en pixels entre la position de chaque troisième contour P31-P33 et celle du deuxième contour P21-P23 correspondant. Cette relation correspond à la deuxième application entre les troisièmes contours et les deuxièmes contours.

A l'étape S8, le circuit de câblage 34 est configuré pour estimer la distance d'un objet par rapport au dispositif 1 en fonction des deuxièmes décalages en pixels entre les positions des premiers contours P11-P13 et celles des deuxièmes contours P21-P23 représentant l'objet en question. L'estimation de la distance résulte d'une correspondance prédéterminée entre des valeurs de distance en centimètre ou en mètre et le décalage en nombre de pixels. Cette correspondance prédéterminée dépend de la focale des objectifs des caméras et de la densité des pixels. Par exemple, si un même objet situé à 1m du dispositif 1 est décalé de cent pixels entre les première C1 et deuxième C2 caméras, alors à 2m il aurait été décalé de cinquante pixels, et ainsi de suite jusqu'à zéro pixel s'il est à l'infini.

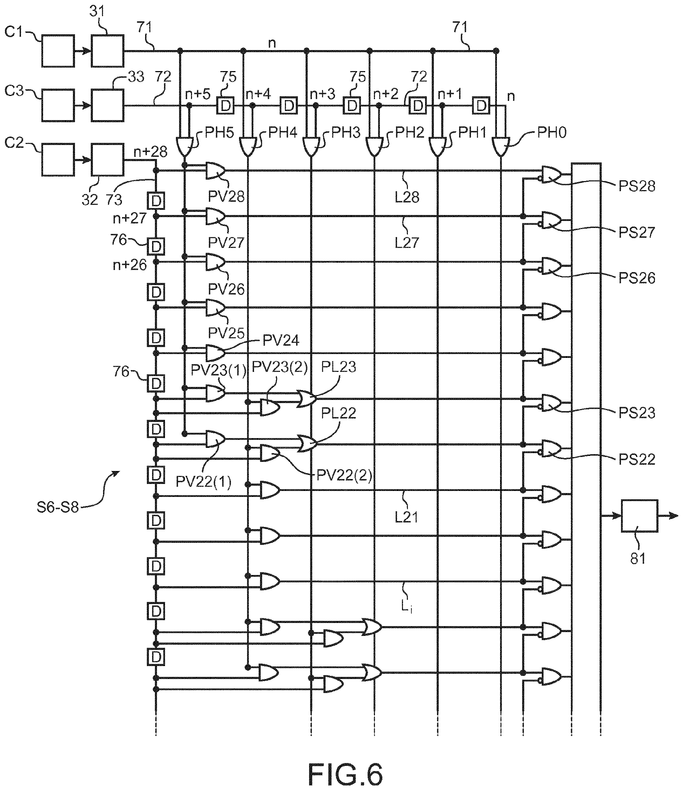

Les étapes S6-S8 sont décrites avec plus de détail en référence à la Fig. 6 en plus de la Fig. 5.

En effet, la Fig. 6 illustre de manière schématique un circuit électronique plus détaillé selon un mode de réalisation préféré de l'invention.

Afin de simplifier l'illustration du circuit électronique, la résolution des caméras C1, C2, C3 est supposée être de l'ordre de seulement quelques centaines de pixels. En outre, la distance d1 entre les première C1 et troisième C3 caméras est choisie assez petite pour qu'un objet très proche (par exemple à 1m des caméras), ne présente au maximum qu'un décalage de six pixels entre les contours les représentant sur les première I1 et troisième I3 images sachant qu'un objet à l'infini ne présente aucun décalage entre les deux images. On notera que le nombre de décalage dépend également de la distance minimale de reconnaissance de contours (par exemple à 1m de la caméra) et de la résolution de l'image en plus de la distance entre les deux caméras. A titre d'exemple, la distance entre les première C1 et troisième C3 caméras est de l'ordre de 5cm et celle entre la première C1 et la deuxième C2 caméra est de l'ordre de 30cm. Ceci permet au dispositif de reconnaissance 1 de reconnaitre des objets entre 1m et l'infini.

En référence à la Fig. 5, on suppose qu'un premier contour P11 est référencé par un pixel numéro « n » sur la première image I1. Le troisième contour P31 correspondant à ce pixel « n » se trouve dans la zone de guidage Z1 de la troisième image I3 défini par un intervalle I₁=[n, n+5]. Pour une distance entre les première C1 et deuxième C2 caméras six fois plus grande que celle entre les première C1 et troisième C3 caméras, le nombre de décalage dans la deuxième image I2 peut être compris dans un intervalle I₂=[n, n+28] représentant la deuxième zone de recherche Z2. Ici, on prend l'exemple d'un décalage maximum pour un objet proche, de cinq pixels entre la première caméra C1 et la troisième caméra C3. Donc, même si le décalage réel serait 5,5 pixels, on le voit quand même à cinq pixels. La deuxième caméra C2, étant cinq fois plus éloignée que la troisième caméra C3, devrait donner le contour correspondant au plus loin à 27,5 pixels (i.e. 5 fois 5,5 pixels). Par conséquent, le contour le plus décalé entre les première et deuxième caméras C1, C2 sera à vingt-huit pixels maximum. Ceci permet de couvrir le cas où un contour situé entre deux pixels sur la troisième caméra C3 apparait aléatoirement soit en n+i soit en n+(i-1) garantissant ainsi constamment l'existence d'une correspondance entre les première et deuxième caméras C1, C2.

Ainsi, selon ce mode de réalisation, le circuit de câblage 34 illustré sur la Fig. 6 comporte des premier 71 et deuxième 72 câblages horizontaux reliés aux sorties des premier 31 et troisième 33 dispositifs de codage respectivement ainsi qu'un premier câblage vertical 73 relié à la sortie du deuxième dispositif de codage 32. Le câblage du circuit est décrit uniquement à titre d'exemple et peut bien entendu être configuré différemment par l'homme du métier.

Les premier 71 et deuxième 72 câblages horizontaux représentent des lignes de comparaison entre les images des première C1 et troisième C3 caméras (i.e. les caméras proches). En outre, les sorties de cette comparaison sont couplées au premier câblage vertical 73 pour les comparer à l'image de la deuxième caméra C2.

A chaque coup d'horloge, le premier câblage horizontal 71 est configuré pour recevoir le niveau d'un seul pixel de la première image. Ce niveau est soit un « 1 » représentant un contour soit un « 0 » représentant l'absence de contour. En revanche, le deuxième câblage horizontal 72 est configuré pour avoir déjà reçu les niveaux de cinq pixels consécutifs de la troisième image I3 tandis que le premier câblage vertical 73 est configuré pour avoir déjà reçu les niveaux de vingt-huit pixels consécutifs de la deuxième image I2. Ainsi, à chaque coup d'horloge relatif au premier câblage horizontal 71 correspondent les cinquième et vingt-huitième coups d'horloge relatifs respectivement au deuxième câblage horizontal 72 et au câblage vertical 73. Ainsi, lorsque le niveau du pixel numéroté « n » de la première image I1, noté p₁(n), se trouve sur le premier câblage horizontal 71, les niveaux de six pixels numérotés de « n » à « n+5 » de la troisième image I3, notés p₃(n),...,p₃(n+5) se trouvent sur le deuxième câblage horizontal 72 et les niveaux de vingt-neuf pixels numérotés « n » à « n+28 » de la deuxième image I2, notés p₂(n),...,p₂(n+28) se trouvent sur le câblage vertical 73.

En effet, le deuxième câblage horizontal 72 comporte cinq opérateurs de décalage horizontaux 75 (i.e. éléments ou composants électroniques de décalage) connectés en série permettant d'avoir les valeurs de six pixels consécutifs de la troisième image I3. Le niveau du pixel p₃(n) de la troisième image I3 est décalé en cascade à chaque coup d'horloge (relatif au deuxième câble horizontal 72) par les opérateurs de décalage horizontaux 75 et est remplacé par le niveau du pixel suivant p₃(n+1). Autrement dit, le pixel qui était à gauche est déplacé par l'opérateur de décalage 75 vers la droite à chaque coup d'horloge. Ainsi, les niveaux de six pixels consécutifs p₃(n),...,p₃(n+5) se trouvent sur le deuxième câblage horizontal 72 séparés deux-à-deux de manière alternée par chacun des cinq opérateurs de décalage 75.

Etant donné que la zone de guidage Z1 relative à la troisième caméra C3 s'étend entre les pixels p₃(n),...,p₃(n+5), alors la valeur (1 ou 0) du pixel p₁(n) (relatif à la première image I1) sur le premier câblage horizontal 71 peut ainsi être comparée avec les valeurs des pixels p₃(n),...,p₃(n+5) (relatifs à la troisième image I3) sur le deuxième câblage horizontal 72. Cette comparaison est réalisée par six portes logiques « ET » horizontales PH0,...,PH5 couplant les premier 71 et deuxième 72 câblages horizontaux. Plus particulièrement, les valeurs des pixels p₁(n) et p₃(n) sont injectées dans la porte logique horizontale PH0, les valeurs des pixels p₁(n) et p₃(n+1) sont injectées dans la porte logique horizontale PH1 et ainsi de suite.

Le décalage entre un contour P11 de la première image I1 et un contour P31 correspondant de la troisième image I3 est alors déterminé par le rang de la porte logique qui a une valeur de sortie égale à « 1 ». Par exemple, si PHj=1, alors on sait que le décalage en pixels entre des contours correspondants des première et troisième images est égal à « j ». Cette relation entre les premiers contours représentatifs d'un objet d'intérêt de la première image I1 et les troisièmes contours correspondants de la troisième image I3 forme une première application entre ces deux images relative à cet objet d'intérêt.

Par ailleurs, le premier câblage vertical 73 comporte vingt-huit opérateurs de décalage verticaux 76 connectés en série permettant d'avoir les niveaux (1 ou 0) de vingt-neuf pixels consécutifs de la deuxième image I2. Le niveau du pixel p₂(n) de la ligne sélectionnée de la deuxième image I2 est décalé en cascade à chaque coup d'horloge par les opérateurs de décalage verticaux 76 et est remplacé par le niveau du pixel suivant p₂(n+1). Autrement dit, le pixel qui était en haut est déplacé vers le bas à chaque coup d'horloge. Ainsi, les niveaux de vingt-neuf pixels consécutifs p₂(n),...,p₂(n+28) se trouvent sur le câblage vertical 73 séparés de manière séquentielle et alternée par les vingt-huit opérateurs de décalage verticaux 76.

Etant donné que la deuxième zone de recherche de correspondance Z2 relative à la deuxième caméra C2 s'étend entre les pixels p₂(n) et p₂(n+28), alors les niveaux de sortie de ces pixels sont comparés aux sorties des six portes logiques horizontales PH0,...,PH5. Plus particulièrement, les niveaux des pixels sur le câblage vertical 73 sont comparés par paquets aux valeurs de sorties des portes logiques horizontales PH0,...,PH5. Avantageusement, un recouvrement de deux pixels est prévu entre deux paquets consécutifs.

Cette comparaison est réalisée par des portes logiques « ET » verticales PV0,...,PV28 couplant le câblage vertical 73 avec les sorties des portes logiques horizontales PH0,...,PH5. Plus particulièrement, selon cet exemple, un premier paquet de sept pixels p₂(n+28),...,p₂(n+22) du câblage vertical 73 est comparé avec la sortie de la porte logique horizontale PH5 par l'intermédiaire d'un premier groupe de sept portes logiques verticales PV28(1),...,PV22(1). Un deuxième paquet de sept pixels p₂(n+23),...,p₂(n+17) du câblage vertical 73 est comparé avec la sortie de la porte logique horizontale PH4 par l'intermédiaire d'un deuxième groupe de sept portes logiques verticales PV23(2),...,PV17(2) et ainsi de suite. On notera que les niveaux des pixels p₂(n+22) et p₂(n+23) sont pris en compte dans les deux comparaisons. En effet, selon cet exemple, on subdivise les vingt-neuf pixels p₂(n),...,p₂(n+28) en six paquets de sept pixels chacun et avec deux recouvrements de deux pixels entre chaque couple de paquets adjacents. Le recouvrement entre deux pixels permet de prendre en compte le cas où un contour peut être plus ou moins défini entre deux pixels adjacents. Dans ce cas, les sorties des portes logiques verticales PV23(1) et PV23(2) sont injectées dans une porte logique « OU » PL23 et de même, les sorties des portes logiques verticales PV22(1) et PV22(2) sont injectées dans une autre porte logique « OU » PL22. La zone de recouvrement est choisie selon le rapport de distances entre les deux caméras les plus proches.

Finalement, vingt-neuf lignes de sorties L0,...,L28 sont formées par les sorties des portes logiques « ET » verticales (dans les zones de non recouvrement) et les sorties des portes logiques « OU » indiquant le décalage entre les première et deuxième caméras. En effet, si un contour est détecté entre les première et troisième images, il n'y aura qu'une seule ligne de sortie parmi les vingt-neuf lignes de sortie L0,...,L28 qui va avoir le niveau « 1 ».

Ainsi, la valeur de décalage entre un contour de la première image I1 et un contour correspondant de la deuxième image I2 est déterminée par le rang de la ligne de sortie Li qui se trouve au niveau « 1 ». Par exemple, si Li=1, alors on sait que le décalage en pixels entre des contours correspondants des première I1 et deuxième I2 images est égal à « i ».

Ces comparaisons associent ainsi pour chaque troisième contour compris dans la zone de recherche de guidage Z1 un seul deuxième contour correspondant compris dans la deuxième zone de recherche Z2 appartenant à la deuxième image I2 déterminant alors la correspondance stéréoscopique entre les premiers contours et les deuxièmes contours.

Avantageusement, le circuit de câblage 34 comporte une dernière colonne de portes logiques « ET » de sortie PS0,...,PS28 adaptée pour valider l'existence d'une correspondance unique entre un contour sur la première image I1 et un seul contour sur la deuxième image I2.

Ces portes logiques « ET » de sortie PS0,...,PS28 sont couplées aux lignes de sorties L0-L28 de sorte que chaque porte logique « ET » de sortie PSi reçoit la valeur portée par la ligne de sortie Li ainsi que l'inverse de la valeur portée par la ligne de sortie précédente L(i-1). Toutefois, la première porte logique « ET » de sortie PS0 reçoit la valeur « 1 » en plus de la valeur portée par la première ligne de sortie L1.

Afin d'illustrer le fonctionnement du circuit de câblage 34, supposons que le niveau du pixel numéro « n » est égal à « 1 » (i.e. p₁(n)=1) signifiant la présence d'un contour à la position « n ». En outre, supposons que le contour correspondant dans la troisième image I3 est détecté à la position « n+4 » (i.e. p₃(n+4)=1). Les valeurs des autres pixels sont donc à zéro (p₃(n)= p₃(n+1)= p₃(n+2)= p₃(n+3)= p₃(n+5)=0) sachant que la distance entre les première C1 et troisième C3 caméras est configurée pour qu'il y ait un seul contour dans la zone de guidage Z1. Par ailleurs, supposons que le premier pixel ayant la valeur « 1 » dans la deuxième image I2 est le pixel numéro « 21 » (i.e. p₂(17)=p₂(18)= p₂(19)=p₂(20)=0 et p₂(21)=1, p₂(22)=0, p₂(23)=0) alors les niveaux sur la ligne L21 et toutes les autres lignes de sortie Lx sont égaux à « 1 » et « 0 » respectivement. La porte logique de sortie PS21 se trouve alors au niveau « 1 » et par conséquent, le décalage entre le contour de la première image I1 et celui correspondant de la deuxième image I2 est égal à « 21 » et ceci reste valable même si un autre contour existait entre p₂(1) et p₂(16) ou entre p₂(24) et p₂(28). On notera qu'il aurait fallu reconnaître cet autre contour comme non approprié via un algorithme complexe si la troisième caméra de guidage n'avait pas permis de le considérer comme non significatif.

Ensuite, la distance est directement déduite de la valeur de décalage en utilisant une fonction (ou une courbe) prédéterminée de la distance en fonction du décalage.

Avantageusement, le circuit électronique 3 comporte un mécanisme d'alerte 81 (voir Fig. 3 ou Fig. 6) configuré pour signaler tout objet dont la distance par rapport aux caméras C1, C2, C3 commence à atteindre une limite inférieure prédéterminée. Cette limite inférieure peut être configurée selon le type d'application et peut par exemple être égal à 50cm ou 1m.

Selon un mode de réalisation, le dispositif 1 de reconnaissance de distance comporte un projecteur 85 de motifs (voir Fig. 3) configuré pour projeter des motifs répétitifs en face des trois caméras C1, C2 et C3. Le projecteur 85 de motifs est par exemple un pointeur laser avec un embout kaléidoscopique. Par ailleurs, la projection peut avantageusement être réalisée dans le domaine du proche infrarouge.

On notera que l'espacement des motifs répétitifs est configuré pour être supérieur à celui entre la première caméra et la troisième caméra de guidage. Ainsi, ces motifs artificiels sont facilement identifiés par les trois caméras C1, C2 et C3 sans aucun risque d'erreur de correspondance. Ceci permet au dispositif 1 de reconnaissance de gagner davantage en performance sur des zones uniformes (i.e. sans contours marqués) ou en zones peu lumineuses. Là aussi, on notera que sans la troisième caméra de guidage, la répétition des motifs aurait créé de nombreuses correspondances potentielles difficiles à rejeter sans recourir à un algorithme complexe.

Avantageusement, le circuit électronique 3 peut également comporter un processeur 83 (représenté en pointillé sur la Fig. 3) configuré pour réaliser un éventuel redressement des images pour qu'une ligne horizontale soit la même sur les trois images. Dans ce cas, les images en sortie des caméras C1, C2, C3 passent par le microprocesseur qui les redresse avant de les transmettre aux dispositifs de codage 31, 32, 33.

On notera que le montage mécanique des caméras sur un support rigide (par exemple une réglette) permet d'avoir un alignement sur les images des trois caméras. Toutefois, au cas où les caméras ne sont pas calibrées ou si la qualité de leurs objectifs n'est pas optimale ou si le montage mécanique des trois caméras n'est pas parfait, les lignes de chaque caméra peuvent être à des niveaux différents voire non parallèles. Ainsi, afin de corriger cet éventuel problème, le processeur comporte un logiciel de redressement (connu pour l'homme du métier) pour corriger l'alignement des lignes entre les différentes images.

Par ailleurs, au cas où les éléments extraits des images sont des segments d'images ou des sous-zones d'images rectangulaires, le processeur 83 est en outre avantageusement configuré pour traiter les segments d'images ou les sous-zones d'images rectangulaires en les rendant plus discernables. Ce traitement peut être réalisé de manière connue en pondérant les pixels correspondant à ces éléments avec plus de poids, ou en variant leur couleur ou leur luminosité, etc.

Avantageusement, le processeur 83 est en outre configuré pour estimer une distance approximative sur une zone d'image sans contours en mettant en relation des pixels présentant une intensité lumineuse identique et situés dans une zone de distance (i.e. décalage) identique aux contours environnants déjà trouvés.

Le processeur 83 peut aussi être configuré pour remplir les espaces entre les contours dont les distances ont été calculées. Ceci peut être réalisé selon une technique connue de continuité des distances entre les pixels proches.

Le processeur 83 peut également être configuré pour réaliser une reconnaissance de forme sur des zones d'images identifiées selon une distance unique en implémentant un logiciel connu de reconnaissance de forme pour par exemple identifier des personnes.

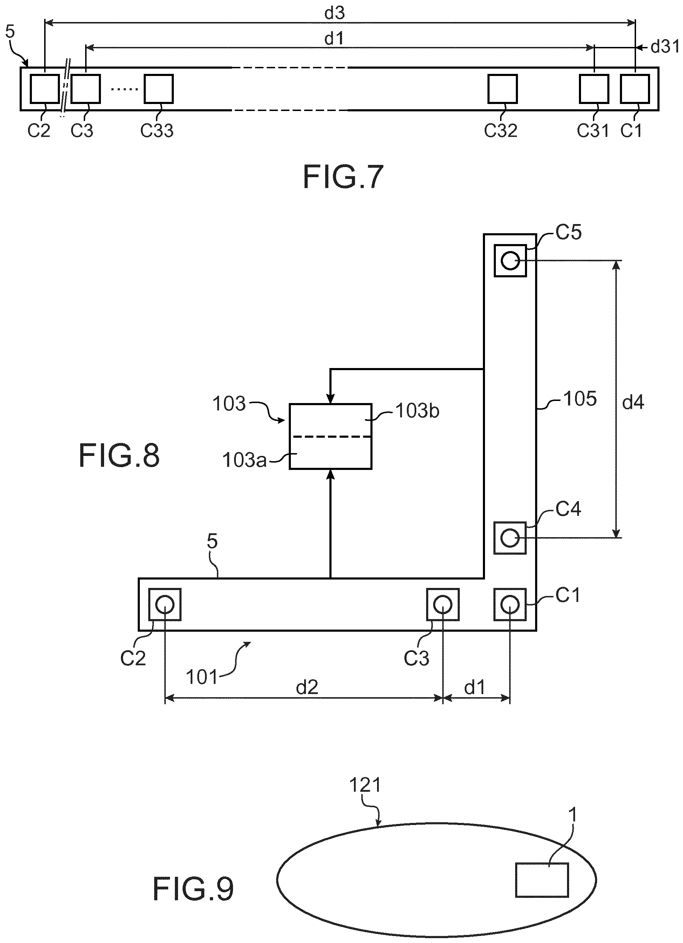

La Fig. 7 illustre de manière schématique un dispositif de reconnaissance de distance en temps réel, selon un autre mode de réalisation préféré de l'invention.

Selon ce mode de réalisation, le dispositif de reconnaissance 1 de distance comporte une suite de caméras de guidage supplémentaires C31,C32,...,C39 disposées selon des écarts croissants en partant de la première caméra C1 vers la troisième caméra C3 de guidage. Ainsi, l'écart entre chaque caméra supplémentaire et celle qui lui précède varie de manière croissante.

Ceci permet d'utiliser des caméras à très fort nombre de pixels (par exemple supérieur ou égal à 4000 pixels) permettant une mesure très précise des distances. En outre, ceci permet de travailler facilement dans des zones aux contours très proches (par exemple, feuillage d'arbre).

A titre d'exemple, le dispositif de reconnaissance 1 de distance comporte une seule caméra de guidage supplémentaire C31. Ainsi, le dispositif de reconnaissance 1 de distance comporte quatre caméras C1, C2, C3, C31. Par exemple, l'écart d1 entre la première caméra C1 et la troisième caméra C3 peut être d'environ un-cinquième de celui d3 entre la première caméra C1 et la deuxième caméra C2. Dans ce cas, l'écart d31 entre la première caméra C1 et la caméra de guidage supplémentaire C31 peut être d'environ un-vingt-cinquième de celui d3 entre la première caméra C1 et la deuxième caméra C2.

Pour donner des valeurs numériques, la distance entre la première caméra C1 et la caméra de guidage supplémentaire C31 peut être égale à environ 1cm, la distance entre la première caméra C1 et la troisième caméra de guidage peut être égale à environ 5cm, et finalement, la distance entre la première caméra C1 et la deuxième caméra C2 peut être égale à environ 25cm.

La Fig. 8 illustre de manière schématique un dispositif de reconnaissance de distance en temps réel, selon encore un autre mode de réalisation préféré de l'invention.

Selon cet autre mode de réalisation, le dispositif de reconnaissance 101 de distance comporte des première C1, deuxième C2, troisième C3, quatrième C4 et cinquième C5 caméras configurées pour acquérir des images simultanément.

Comme précédemment, les première C1, deuxième C2 et troisième C3 caméras sont montées de manière colinéaire sur un support ou une première réglette 5. La troisième caméra C3 est une caméra de guidage disposée plus près de la première caméra C1 que de la deuxième caméra C2. Toutefois, les quatrième C4 et cinquième C5 caméras sont montées sur une deuxième réglette 105 disposée perpendiculairement à la première réglette 5. Les quatrième C4 et cinquième C5 caméras sont espacées d'une distance d4 prédéterminée et sont perpendiculaire à la disposition colinéaire des première C1, deuxième C2 et troisième C3 caméras. La quatrième caméra C4 est une caméra de guidage disposée plus près de la première caméra C1 que de la cinquième caméra C5 et joue le même rôle que la troisième caméra C3. L'ensemble des première C1, quatrième C4 et cinquième C5 caméras est configuré pour détecter les contours horizontaux tandis que l'ensemble des première C1, deuxième C2 et troisième C3 caméras est configuré pour détecter les contours verticaux. Ce dispositif de reconnaissance 101 permet une bonne reconnaissance des contours verticaux et horizontaux augmentant ainsi davantage la précision des mesures de distances.

Le dispositif de reconnaissance 101 comporte également un circuit électronique 103 formé de premier 103a et deuxième 103b circuits chacun étant équivalent au circuit 3 décrit précédemment. En effet, le premier circuit 103a est associé aux première C1, deuxième C2 et troisième C3 caméras pour détecter les contours verticaux tandis que le deuxième circuit 103b est associé aux première C1, quatrième C4 et cinquième C5 caméras pour détecter les contours horizontaux.

Selon encore d'autres modes de réalisation, le dispositif de reconnaissance 101 peut comporter une pluralité de caméras disposées selon des directions différentes par rapport à la disposition colinéaire des première, deuxième et troisième caméras.

La Fig. 9 illustre de manière schématique un système mobile comportant un dispositif de reconnaissance 1 de distance, selon un mode de réalisation préféré de l'invention.

Le système mobile 121 peut être un véhicule terrestre (voiture, camion, train, etc.), maritime (bateau, navire, etc.) un aéronef (avion, hélicoptère, etc.) ou un drone. En étant équipé d'un dispositif de reconnaissance 1 de distance, le système mobile 121 est adapté à reconnaitre en temps réel des obstacles et à avoir un aperçu de l'environnement sans utiliser des calculs très lourds et couteux en termes de temps de calcul et de consommation électrique.

Le dispositif de reconnaissance 1 de distance peut être monté sur le système mobile 121 selon une direction sélectionnée parmi les directions suivantes : parallèle à la direction de la pesanteur, perpendiculaire à la direction de la pesanteur, ou oblique par rapport à la direction de la pesanteur.

Une direction parallèle à la direction de la pesanteur permet d'obtenir des informations de distances à partir des contours horizontaux. Une direction perpendiculaire à la direction de la pesanteur permet d'obtenir des informations de distances à partir des contours verticaux. Par ailleurs, une direction oblique par rapport à la direction de la pesanteur permet d'obtenir des informations de distances à partir des contours horizontaux ou verticaux.

Avantageusement, le système mobile 121 peut comporter plusieurs dispositifs de reconnaissance 1 de distance montés selon plusieurs directions différentes. Par ailleurs, le système mobile 121 peut être équipé d'un dispositif de reconnaissance 101 de distance selon le mode de réalisation de la Fig. 7.

## Revendications

1. Dispositif de reconnaissance de distance en temps réel comprenant une première et une deuxième caméras (C1, C2), **caractérisé en ce qu'**il comporte :
- une troisième caméra (C3) disposée plus près de la première caméra (C1) que de la deuxième caméra C2, lesdites première, deuxième et troisième caméras étant configurées pour acquérir simultanément des première, deuxième et troisième images (I1, I2, I3) respectivement, et
- un circuit électronique (3) configuré pour estimer la distance d'un objet en fonction d'une correspondance stéréoscopique établie entre des premiers et deuxièmes éléments (E1, E2) représentatifs dudit objet et appartenant aux première et deuxième images (I1, I2) respectivement, ladite correspondance stéréoscopique étant établie en tenant compte d'une relation entre lesdits premiers éléments (E1) et des troisièmes éléments (E3) correspondants appartenant à la troisième image.

2. Dispositif selon la revendication 1, **caractérisé en ce que** le circuit électronique (3) est configuré pour extraire depuis les première, deuxième et troisième images (I1, I2, I3) des premiers, deuxièmes et troisièmes éléments sélectionnés parmi les éléments suivants : contours (P11, P21, P31), segments d'images, et sous-zones d'images rectangulaires.

3. Dispositif selon la revendication 1 ou 2, **caractérisé en ce que** le circuit électronique est configuré pour :
- extraire les premiers, deuxièmes et troisièmes éléments appartenant à une même ligne horizontale sur les première, deuxième et troisième images (I1, I2, I3),
- établir une application entre les premiers éléments et les troisièmes éléments en associant pour chaque premier élément un unique troisième élément correspondant compris dans une zone de recherche intermédiaire réduite (Z1) appartenant à la troisième image (I3),
- établir ladite correspondance stéréoscopique entre les premiers éléments et les deuxièmes éléments en associant pour l'unique troisième élément compris dans la zone de recherche intermédiaire réduite (Z1) correspondante un seul deuxième élément correspondant compris dans une deuxième zone de recherche (Z2) appartenant à la deuxième image (I2).

4. Dispositif selon l'une quelconque des revendications précédentes, **caractérisé en ce que** lesdits premiers, deuxièmes et troisièmes éléments sont des premiers, deuxièmes et troisièmes contours (P11, P21, P31) respectivement.

5. Dispositif selon la revendication 4, **caractérisé en ce que** le circuit électronique comporte :
- des filtres d'extraction de contraste (41, 42, 43) configurés pour réaliser une convolution sur une même ligne de chacune des première, deuxième et troisième images formant ainsi des premières, deuxièmes et troisièmes courbes de contraste sur ladite même ligne des première, deuxième et troisième images,
- des filtres de seuillage (51, 52, 53) configurés pour réaliser des seuillages sur lesdites premières, deuxièmes et troisièmes courbes de contraste formant ainsi les premiers, deuxièmes et troisièmes contours respectivement,
- des codeurs (61, 62, 63) configurés pour réaliser un codage sur lesdits premiers, deuxièmes et troisièmes contours formant ainsi des premiers, deuxièmes et troisièmes niveaux discrets respectivement, et
- un circuit (34) de composants électroniques configuré pour :
- déterminer un premier décalage en pixels entre la position de chaque premier contour et celle du troisième contour correspondant définissant ainsi ladite application entre les premiers contours et les troisièmes contours,
- déterminer un deuxième décalage en pixels entre la position de chaque premier contour et celle du deuxième contour correspondant définissant ainsi ladite correspondance stéréoscopique entre les premiers contours et les deuxièmes contours, et
- estimer la distance d'un objet en fonction des deuxièmes décalages en pixels entre les positions des premiers contours et celles des deuxièmes contours représentant ledit objet.

6. Dispositif selon l'une quelconque des revendications précédentes, **caractérisé en ce que** le circuit électronique (3) comporte un mécanisme d'alerte (81) configuré pour signaler tout objet dès que sa distance par rapport aux caméras commence à atteindre une limite inférieure prédéterminée.

7. Dispositif selon l'une quelconque des revendications précédentes, **caractérisé en ce que** les première, deuxième et troisième caméras (C1, C2, C3) sont des caméras en lumière visible ou des caméras infrarouges.

8. Dispositif selon l'une quelconque des revendications précédentes, **caractérisé en ce qu'**il comporte un projecteur (85) de motifs configuré pour projeter des motifs répétitifs en face des première, deuxième et troisième caméras (C1, C2, C3), lesdits motifs répétitifs présentant un espacement supérieur à celui entre les première et troisième caméras.

9. Dispositif selon l'une quelconque des revendications précédentes, **caractérisé en ce que** le circuit électronique (3) comporte en outre un processeur (83) configuré pour réaliser un redressement des images avant de réaliser la reconnaissance de distance.

10. Dispositif selon l'une quelconque des revendications précédentes, **caractérisé en ce qu'**il comporte une suite de caméras de guidage supplémentaires disposées selon des écarts croissants en partant de la première caméra vers la deuxième caméra de guidage.

11. Dispositif selon la revendication 10, **caractérisé en ce qu'**il comporte une caméra de guidage supplémentaire, l'écart entre la première caméra et la troisième caméra étant d'environ un-cinquième de celui entre la première caméra et la deuxième caméra, et l'écart entre la première caméra et la caméra de guidage supplémentaire étant d'environ un-vingt-cinquième de celui entre la première caméra et la deuxième caméra.

12. Dispositif selon l'une quelconque des revendications précédentes, **caractérisé en ce qu'**il comporte en outre une pluralité d'autres caméras disposées selon des directions différentes par rapport à la disposition colinéaire des première, deuxième et troisième caméras.

13. Dispositif selon la revendication 12, **caractérisé en ce qu'**il comporte des quatrième et cinquième caméras (C4, C5) espacées d'une distance prédéterminée et montées perpendiculairement par rapport à la disposition colinéaire des première, deuxième et troisième caméras (C1, C2, C3), la quatrième caméra étant disposée à proximité de la première caméra, lesdites première, deuxième, troisième, quatrième et cinquième caméras étant configurées pour acquérir des images simultanément.

14. Système mobile comportant le dispositif selon l'une quelconque des revendications précédentes.

15. Procédé de reconnaissance de distance en temps réel en utilisant une première et une deuxième caméras (C1, C2), **caractérisé en ce qu'**il comporte les étapes suivantes :
- utiliser une troisième caméra (C3) située plus près de la première caméra (C1) que de la deuxième caméra (C2), lesdites première, deuxième et troisième caméras étant configurées pour acquérir simultanément des première, deuxième et troisième images respectivement, et
- estimer la distance d'un objet en fonction d'une correspondance stéréoscopique établie entre des premiers et deuxièmes éléments représentatifs dudit objet et appartenant aux première et deuxième images respectivement, ladite correspondance stéréoscopique étant établie en tenant compte d'une relation entre lesdits premiers éléments et des troisièmes éléments correspondants appartenant à la troisième image.
